# EUROPEAN PATENT SPECIFICATION

(11) **EP 3 136 659 B1**
(45) Date of publication and mention of the grant of the patent: **29.05.2019**
(21) Application number: 16179305.4
(22) Date of filing: 13.07.2016
(51) Int. Cl.: H04M 1/725, H04L 12/58

(54) **METHODS, DEVICES, TERMINAL AND ROUTER FOR SENDING MESSAGE**
VERFAHREN, VORRICHTUNGEN, ENDGERÄT UND ROUTER ZUM SENDEN EINER NACHRICHT
PROCÉDÉS, DISPOSITIFS, TERMINAL ET ROUTEUR POUR L'ENVOI DE MESSAGE

(30) Priority: 31.08.2015 CN 201510549221
(43) Date of publication of application: 01.03.2017
(73) Proprietor: Xiaomi Inc., Beijing 100085 (CN)
(72) Inventor: GAO, Yi, Beijing 100085 (CN); WANG, Hongqiang, Beijing 100085 (CN); GE, Yunyuan, Beijing 100085 (CN)
(74) Representative: Cougard, Jean-Marie

(56) References cited:
- US-A1- 2004 199 663
- US-A1- 2014 164 538

## Description

### TECHNICAL FIELD

The present disclosure generally relates to the field of network communication technology, and more particularly, to methods, devices, a terminal and a router for sending a message.

### BACKGROUND

With development and popularization of smart devices, a user may possess more than one smart device, such as a smart mobile phone, a wearable device and a tablet computer and the like. Through these smart devices, the user can receive and send messages and run applications (APP) and the like. Then it is possible that more than one smart device can receive messages, notifications, and the like.

Document US 2004/199663 A1 discloses a system and method to facilitate communication and collaboration by considering the timing of a user's activities on one or more clients via accessing, from a centralized server, information about the user's client-server interactions.

### SUMMARY

The invention is defined in the appended set of claims.

In order to solve the problem in the related art, the present invention provides a method for sending information and a corresponding control device.

According to a first aspect of embodiments of the present disclosure, there is provided a method, applied in a control device, for sending information, as defined in claim 1, the method including:
establishing connections with smart devices;
when identifying a device which is in the user operation state, acquiring information about the device which is in the user operation state; and
returning the information about the device in the user operation state.

In a particular embodiment, the method further includes:
receiving a notification of being in the user operation state sent by a smart device; and
storing a most recent operation state of the smart device.

In a particular embodiment, the method further includes:
receiving a notification of being in a user operation disabling state sent by a smart device; and
storing a most recent operation state of the smart device.

In a particular embodiment, the method further includes:
receiving from a smart device a message newly received by the smart device;
sending the message to a smart device which is in the user operation state.

In a particular embodiment, acquiring information about the device which is in the user operation state includes:
retrieving the information about the device which is in the user operation state.

In a particular embodiment, establishing connections with smart devices further includes:
acquiring identifications of the smart devices; and
storing the identifications of the smart devices.

In a particular embodiment, establishing connections with smart devices further includes:
when firstly establishing a connection with a smart device, acquiring an image of the smart device; and
storing the image of the smart device as corresponding to an identification of the smart device.

In a particular embodiment, acquiring information about the device which is in the user operation state includes:
when no information about the device which is in the user operation state is retrieved, positioning a current location of a user with an indoor positioning technique;
acquiring an image of a smart device which is in a set range about the user; and
matching the acquired image with the stored image of the smart device to obtain a similarity, if the similarity is larger than a set threshold, determining the smart device corresponding to the image as the smart device which is in the user operation sate.

In a particular embodiment, acquiring an image of a smart device which is in a set range about the user includes:
capturing with a camera the image of the smart device which is in the set range about the user.

According to a second aspect of embodiments of the present disclosure, there is provided a control device, as defined in claim 5, including :
a connection establishing module configured to establish connections with smart devices;
a device-information acquiring module configured to, when a device which is in the user operation state is identified, acquire information about the device which is in the user operation state; and
a device-information returning module configured to return the information about the device in the user operation state.

In a particular embodiment, the device-information acquiring module is configured to retrieve the information about the device which is in the user operation state.

In a particular embodiment, the connection establishing module includes:
an identification acquiring sub-module configured to acquire identifications of the smart devices; and
an identification storing sub-module configured to store the identifications of the smart devices.

In a particular embodiment, the connection establishing module includes:
an image acquiring sub-module configured to, when a connection is firstly established with a smart device, acquire an image of the smart device; and
an image storing sub-module configured to store the image of the smart device as corresponding to an identification of the smart device.

In a particular embodiment, the image acquiring sub-module is configured to capture the image of the smart device through a camera and store the image.

In a particular embodiment, the device-information acquiring module includes:
a positioning sub-module configured to, when no information about the device which is in the user operation state is retrieved, position a current location of a user with an indoor positioning technique;
an image-data acquiring sub-module configured to acquire an image of a smart device which is in a set range about the user; and
a determining sub-module configured to match the acquired image with the stored image of the smart device to obtain a similarity, if the similarity is larger than a set threshold, determine the smart device corresponding to the image as the smart device which is in the user operation sate.

The technical solutions according to embodiments of the present disclosure may have the following beneficial effects.

In the present disclosure, when the smart device which receives the message is not in the user operation state, the device which is in the user operation state is identified, and the received message is sent to the smart device which is in the user operation state. Thereby, it can timely notify the user of receiving a new message, facilitate the user to timely check the new message, and can avoid missing an important message. This can bring convenience to the user and improve user experience.

In the present disclosure, the smart device which receives the message can determine whether the smart device itself is in a user operation state based on whether a touch operation is detected, whether a switch-on operation or a switch-off operation is detected, and whether a user face image is acquired, or can determine whether the smart device itself is in a user operation state by acquiring from the control device an identification of a device which is in the user operation state. The method is simple and easy for implementation.

In the present disclosure, the smart device can determine a device which is currently in the user operation sate by acquiring the identification of the device which is in the user operation state from the control device, so as to send the message to the device for the user to timely check the message.

In the present disclosure, the smart device can report to the control device about its state based on a detected operation. For example, if the smart device is a smart terminal, the smart device can send to the control device a notification of being in the user operation state when a user touch operation, a grasp operation, a switch-on operation or the like is detected. Then, the control device can mark the stored corresponding state (or store a state) as being in the user operation state. On the other hand, if the smart device does not detect such an operation, or it detects a locked screen or it detects a switch-off operation, the smart device can notify the control device of being in the user operation disabling state. Then, the control device can modify the state of the smart device, to avoid an error in determining which smart device is in the user operation state.

In the present disclosure, the smart device can prompt the message from the control device. For example, the smart device can display the message on the screen, to timely draw attention of the user, and to avoid missing an important message. In addition, when the smart device which receives the message is the smart device which is in the user operation state, the smart device also can prompt the received message.

In the present disclosure, when receiving a notification of a device being identified as in a user operation state, the control device can acquire information about the device which is in the user operation state and return the information about the device to the smart device. Thereby, the smart device which receives the message can timely forward the message to the smart device which is in the user operation state. It can timely notify the user of receiving a new message, facilitate the user to timely check the new message, and can avoid missing an important message. This can bring convenience to the user and improve user experience.

In the present disclosure, the control device can store a state of a smart device based on a received notification about the operation sate of the smart device. For example, if the notification is a notification of being in the user operation state, the state corresponding to the smart device can be stored as being in the user operation state; and if the notification is a notification of being in the user operation disabling state, the state corresponding to the smart device can be stored as being in the user operation disabling state. Thereby, the control device can timely modify the states of the smart devices, and avoid errors in determining which smart device is the one in the user operation state.

In the present disclosure, the control device can also store an identification and an image of a smart device when the control device firstly establishes a connection with the smart device. Then, when the control device cannot retrieve information about the device which is in the user operation state, the control device can position a current location of the user, acquire an image of a smart device which is in a set range about the user, and determine the smart device is the device which is in the user operation state if, based on the image, it is determined that smart device is a smart device already stored in the control device. Thereby, when the control device fails to timely update the state of the smart device which is in the user operation state, the control device can easily determine that the smart device is in the user operation state based on the image, so as to timely notify the user of receiving a new message.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for sending a message according to an exemplary embodiment of the present disclosure.
Fig. 2 is a flow chart illustrating another method for sending a message according to an exemplary embodiment of the present disclosure.
Fig. 3 is a flow chart illustrating another method for sending a message according to an exemplary embodiment of the present disclosure.
Fig. 4 is a flow chart illustrating another method for sending a message according to an exemplary embodiment of the present disclosure.
Fig. 5 is a schematic diagram illustrating an application situation for sending a message according to an exemplary embodiment of the present disclosure.
Fig. 6 is a block diagram of a device for sending a message according to an exemplary embodiment of the present disclosure.
Fig. 7 is a block diagram of another device for sending a message according to an exemplary embodiment of the present disclosure.
Fig. 8 is a block diagram of another device for sending a message according to an exemplary embodiment of the present disclosure.
Fig. 9 is a block diagram of another device for sending a message according to an exemplary embodiment of the present disclosure.
Fig. 10 is a block diagram of another device for sending a message according to an exemplary embodiment of the present disclosure.
Fig. 11 is a block diagram of another device for sending a message according to an exemplary embodiment of the present disclosure.
Fig. 12 is a block diagram of another device for sending a message according to an exemplary embodiment of the present disclosure.
Fig. 13 is a block diagram of another device for sending a message according to an exemplary embodiment of the present disclosure.
Fig. 14 is a block diagram of another device for sending a message according to an exemplary embodiment of the present disclosure.
Fig. 15 is a block diagram of another device for sending a message according to an exemplary embodiment of the present disclosure.
Fig. 16 is a block diagram of another device for sending a message according to an exemplary embodiment of the present disclosure.
Fig. 17 is a block diagram of another device for sending a message according to an exemplary embodiment of the present disclosure.
Fig. 18 is a block diagram of another device for sending a message according to an exemplary embodiment of the present disclosure.
Fig. 19 is a block diagram of another device for sending a message according to an exemplary embodiment of the present disclosure.
Fig. 20 is a block diagram of another device for sending a message according to an exemplary embodiment of the present disclosure.
Fig. 21 is a block diagram of another device for sending a message according to an exemplary embodiment of the present disclosure.
Fig. 22 is a block diagram of a device for sending a message according to an exemplary embodiment of the present disclosure.
Fig. 23 is a block diagram of a device for sending a message according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present disclosure. As used in the present disclosure and the appended claims, terms in singular forms such as "a", "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the context, a term "if" as used herein can be interpreted as "when", "where" or "in response to".

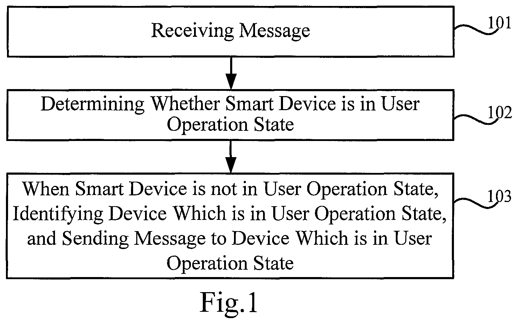

Fig. 1 is a flow chart illustrating a method for sending a message according to an exemplary embodiment, which is applied in a smart device. As shown in Fig. 1, the method includes the following steps.

In step 101, a message is received.

In the present embodiment, the smart device (or electronic device) may be, for instance, any one of a terminal, a wearable device and a smart household appliance. The terminal can be any smart terminal having a network access capability. For example, it can specifically be a mobile phone, a tablet computer, a Personal Digital Assistant (PGA) or the like. The wearable device can be a smart mobile phone, a smart watch, a smart bracelet, smart glasses, etc. The smart household appliance can be a smart television, a smart air conditioner, etc. Wherein, the smart device can be connected to a router through a Wireless Fidelity (Wi-Fi) network, can access a server over a public network through the router, and can communicate with other smart devices through the router. In the present disclosure, the router is a smart router which not only has conventional router features, but also can further include an independent operating system and a magnetic disc of a storage size flexibly set as desired, for example IT.

In step 102, it is determined whether the smart device is in a user operation state.

A smart device in « a user operation state » means that the smart device is currently in a state of interacting with a user in a predefined manner, for instance to carry out a predefined operation triggered by the user.

In this step of the present disclosure, the smart device which receives the message is not necessarily a smart device which is in the user operation state. For example, when a smart mobile phone of the user receives a short message, the smart mobile phone is laid on a table, while the user is currently on a couch watching TV and cannot hear the notification sound of the mobile phone on the table. In this case, only the smart TV is a smart device which is the user operation state.

In step 103, when the smart device is not in the user operation state, a device which is in the user operation state is identified, and the message is sent to the device which is in the user operation state.

When the smart device which receives the message is not in the user operation state, the received message will be sent to a device which is in the user operation state, so as to timely notify the user of receiving a new message.

In the present embodiment, when the smart device which receives the message is not in the user operation state, the device which is in the user operation state is identified, and the received message is sent to the smart device which is in the user operation state. Thereby, it can timely notify the user of receiving a new message, facilitate the user to timely check the new message, and can avoid missing an important message. This can bring convenience to the user and improve user experience.

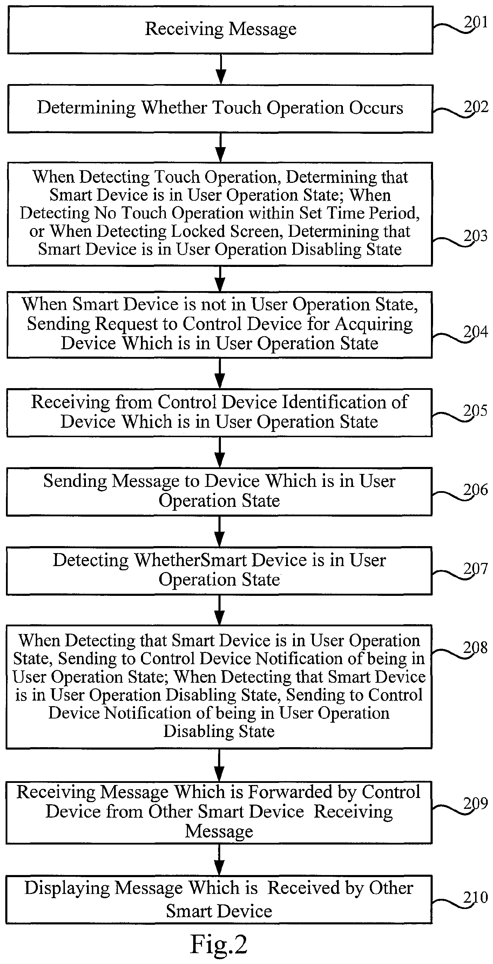

Fig. 2 is a flow chart illustrating another method for sending a message according to an exemplary embodiment, which is applied in a smart device as defined earlier. As shown in Fig. 2, the method includes the following steps.

In step 201, a message is received.

In this step of the present embodiment, the message is received by a smart mobile phone for example. In practical application, the message can be received by other devices such as a tablet computer. The message received by the smart mobile phone can include an incoming call, a short message, a social network message, an instant message, a notification pushed by an application, or the like.

In step 202, it is determined whether a touch operation occurs.

In this step of the present disclosure, the detected touch operation includes a touch operation with respect to the screen, and a grasp operation with respect to other parts of the device.

In step 203, when a touch operation is detected, it is determined that the smart device is in the user operation state; and when no touch operation is detected within a set time period, or when a locked screen is detected, it is determined that the smart device is in a user operation disabling state.

A smart device in « a user operation disabling state » means that the smart device is currently not in a state of interacting with a user in a predefined manner, for instance it is not able to carry out a predefined operation triggered by the user.

The set time period can be several seconds to dozens of seconds, for example.

In addition, in steps 202-203, determining whether the smart device which receives the message is in the user operation state can also be implemented through the following manners.

In a particular embodiment, the device can also determine whether a user switch-on operation is detected, or whether a user switch-off operation is detected.

When a switch-on operation is detected, it is determined that the smart device is in the user operation state; and when user switch-off operation is detected, it is determined that the smart device is in the user operation disabling state.

This manner mainly applies to the situation where the smart device is a wearable device, such as smart glasses or a smart bracelet, and the like.

In a particular embodiment, the device can acquire a front image through a front camera, and it is determined whether a user face image is detected in the front image with a face recognition technique.

When the user face image is detected, it is determined that the smart device is in the user operation state; and when no user face image is detected, it is determined that the smart device is in the user operation disabling state.

In a particular embodiment, the device can also send a request to a control device for acquiring a device which is in an operation state (for instance if the device is unable to determine whether it is in the user operation state). The control device is a device connected to smart devices for managing operation states of the smart devices. For example, the control device is a router.

Then, the device receives from the control device an identification of a device which is in the user operation state; and the device determines whether the received identification corresponds to the identification of the smart device itself.

When the received identification corresponds to the identification of the smart device itself; it is determined that the smart device is in the user operation state; and when the received identification does not correspond to the identification of the smart device itself, it is determined that the smart device is in the user operation disabling state.

In step 204, if the smart device is not in the user operation state, a request is sent to a control device for acquiring a device which is in the user operation state.

If in the above step, it is determined that the smart device is in the user operation disabling state, that is, it is not in the user operation state, the request can be sent to the control device.

In step 205, an identification of a device which is in the user operation state is received from the control device.

In the present embodiment, the control device stores identifications of smart devices and their corresponding states including the user operation state and the user operation disabling state.

In step 206, the message is sent by the smart device to the device which is in the user operation state.

Based on the identification returned by the control device, the smart device which receives the message sends the message to the device in the user operation state which corresponds to the identification.

In addition, in a particular embodiment of the present disclosure, the method also includes the following steps 207-208. It should be noted that, the embodiment of the present disclosure does not limit the time sequence between the following steps 207-208 and the above steps 201-206. That is, the steps 207-208 are not necessarily performed after the step 206. In fact, the steps 207-208 can be performed at any time after the smart device is connected to the control device.

In step 207, it is detected whether the smart device itself is in the user operation state.

In this step of the present disclosure, the smart device connected to the control device can detect whether the smart device itself is in the user operation state.

In step 208, when it is detected that the smart device is in the user operation state, a notification of being in the user operation state is sent to the control device; and when it is detected that the smart device is in the user operation disabling state, a notification of being in user operation disabling state is sent to the control device.

Wherein detecting that the smart device is in the user operation state includes any one of: detecting a user touch operation, a user switch-on operation, or detecting a user face image in a front image captured by a front camera with a face recognition technique.

Sending to the control device the notification of being in the user operation state can include: sending to the control device the notification of being in the user operation state, the notification carrying its identification, such that the control device stores a state (or marks a stored state) corresponding to the identification as being in the user operation state. The stored state may be a parameter indicating the state of the corresponding smart device.

In this step of the present disclosure, detecting that the smart device is in the user operation disabling state includes any one of: detecting no user touch operation within a preset time period, detecting a locked screen, detecting a user switch-off operation, detecting no user face image in a front image captured by a front camera with a face recognition technique within a preset time period.

Through the above steps, the control device can be timely informed of the states of the smart devices, such that the control device can timely modify the state records of the smart devices. Thereby, it can accurately determine which smart device is the smart device in the user operation state.

In addition, in a particular embodiment of the present disclosure, the method also includes the following steps 209-210. It should be noted that, the embodiment of the present disclosure does not limit the time sequence between the following steps 209-210 and the above steps 201-208.

In step 209, a message is received which is forwarded by the control device from other smart device receiving the message.

In this step of the present embodiment, the smart device in the user operation state receives the message which is forwarded by the control device from other smart device receiving the message.

In step 210, the message which is received by the other smart device is displayed.

In this step of the present embodiment, if the smart device in the user operation is a television or a computer, the message can be displayed on the screen of the television or the computer. If the smart device in the user operation is smart glasses, the message is displayed on the lenses. Thereby, it can facilitate the user to timely check the message, facilitate the user to timely check the new message, and can avoid missing an important message. This can bring convenience to the user and improve user experience.

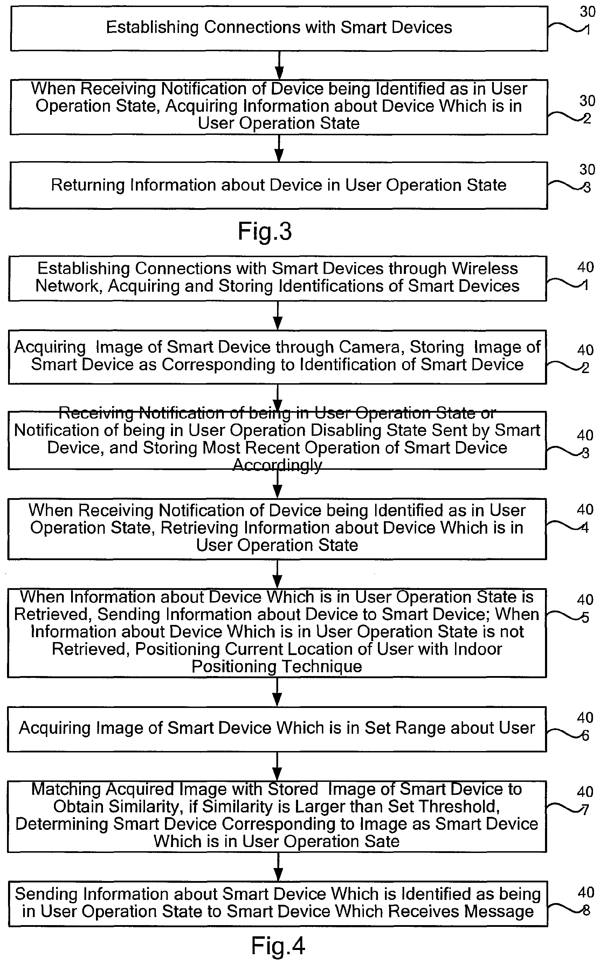

Fig. 3 is a flow chart illustrating another method for sending information according to an exemplary embodiment, which is applied in a control device. As shown in Fig. 3, the method includes the following steps.

In step 301, connections are established with smart devices.

In the present disclosure, the control device can be a device connected to the smart devices for managing operation states of the smart devices.

In step 302, when a device which is in the user operation state is identified, information about the device which is in the user operation state is acquired.

In the present embodiment of the present disclosure, the control device stores identifications of the smart devices connected with it and their corresponding states including the user operation state and the user operation disabling state.

In step 303, the information about the device in the user operation state is returned to a smart device from which a request was previously received, that is, a request for acquiring a device which is in the user operation state (as described for instance in 204 of figure 2).

In the present embodiment, the information about the device which is returned by the control device can be a device identification.

In the present embodiment, the control device can store the state of the smart device based on the received notification of the operation state. For example, when the notification is a notification of being in the user operation state, the state corresponding to the smart device is stored as being in the user operation sate; and when the notification is a notification of being in the user operation disabling state, the state corresponding to the smart device is stored as being in the user operation disabling state. Thereby, the control device can timely modify the stored state of each of the smart devices, and it can accurately determine which smart device is the smart device in the user operation state.

Fig. 4 is a flow chart illustrating another method for sending information according to an exemplary embodiment, which is applied in a control device. As shown in Fig. 4, the method includes the following steps.

In step 401, connections are established with smart devices through a wireless network, identifications of the smart devices are acquired and stored.

In the present embodiment, the control device can be a router. The router can establish connections with the smart devices which have wireless communication modules, such as a smart terminal, a wearable device and a smart household appliance, and can store an identification of each of the smart devices with which said control device is connected.

In step 402, an image of the smart device is acquired through a camera (e.g., a camera of the smart device) and the image of the smart device is stored as corresponding to the identification of the smart device.

In step 403, a notification of being in the user operation state or a notification of being in the user operation disabling state sent by a smart device is received, and the most recent operation of the smart device is stored accordingly.

After the connections are established, the smart devices can send their respective operation state to the control device to be stored therein. As can be seen from the embodiments previously described in reference with Figs. 1-2, a smart device can determine whether the smart device itself is in the user operation state or the user operation disabling state, and the control device can store (or mark and store) the state of the smart device correspondingly.

In step 404, when a device which is in the user operation state is identified, the information about the device which is in the user operation state is retrieved.

When a smart device connected to the control device receives a message, the control device can receive from the smart device a notification of a device being identified as in a user operation state.

In step 405, when the information about the device which is in the user operation state is retrieved, the information about the device is sent to the smart device which is in the user operation state; and when the information about the device which is in the user operation state is not retrieved, a current location of a user is positioned with an indoor positioning technique.

In step 406, an image of a smart device which is in a set range about the user is acquired.

Here, the set range can be a range of a circular region having a radius of 1 meter and the location of the user as a centre. The camera can be a camera on the router or can be a camera on the smart device.

In step 407, the acquired image is matched with the stored image of the smart device to obtain a degree of similarity between the acquired image and the stored image, if the degree of similarity is larger than a set threshold, the smart device corresponding to the image is determined as the smart device which is in the user operation sate.

In this step of the present embodiment, the control device can match the captured image with the image stored in the step 202. Thereby, even if the smart device of which the degree of similarity is larger than the set threshold is not operated by the user, the smart device can nevertheless draw the user's attention when prompting the user of the received message since it is so close to the user. In this regard, the smart device of which the degree of similarity is larger than the set threshold can be determined as the smart device which is in the user operation state.

In step 408, the information about the smart device which is identified as being in the user operation state is sent to the smart device which receives the message.

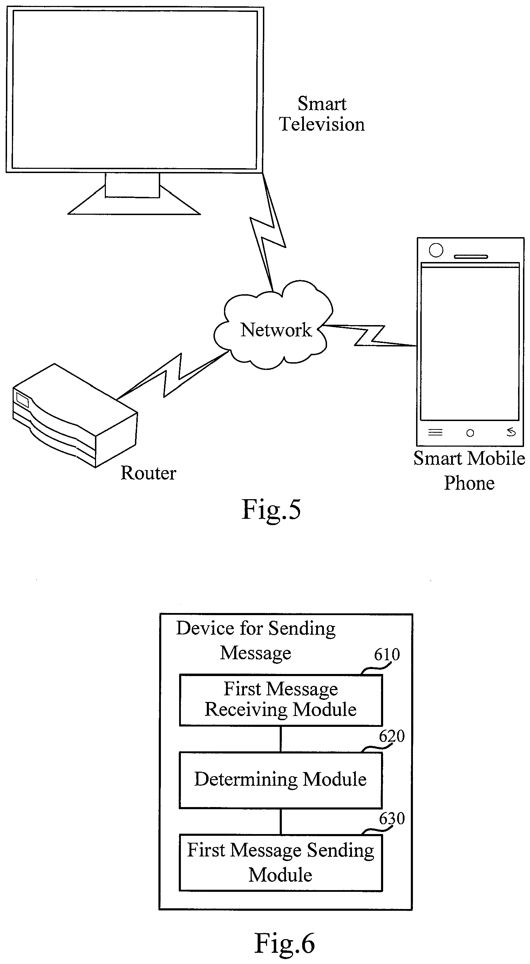

Fig. 5 is a schematic diagram illustrating an application situation for sending a message according to an exemplary embodiment of the present disclosure. As shown in Fig. 5, the situation includes a smart mobile phone as a smart device which receives the message, a router as a control device and a smart television as a smart device which is in the user operation state.

The smart mobile phone, the smart television and other smart devices are connected to the router in advance. Moreover, the router stores the identifications of the smart devices connected with it. The smart devices send their operations states to the control device, and the control device stores the operations states as corresponding to the identifications. When the smart mobile phone receives a message, the smart mobile phone determines whether a touch operation occurs. If no touch operation is detected within a set time period, it can determine that the smart device is in the user operation disabling state. The smart mobile phone sends the received message to the router. The router inquiries the states of the smart devices and finds out that the smart television is in the user operation state. Then the router sends the received message to the smart television.

In the application situation of Fig. 5, the specific process of sending a message can be referred to the above description with respect to Figs. 1-4, which will not be repeated herein.

Corresponding to the methods for sending a message according to the above embodiments, the present disclosure also provides devices, a terminal and a device for sending a message according to the following embodiments.

Fig. 6 is a block diagram of a device for sending a message according to an exemplary embodiment of the present disclosure. As shown in Fig. 6, the device includes: a first message receiving module 610, a determining module 620 and a first message sending module 630.

The first message receiving module 610 is configured to receive a message;
the determining module 620 is configured to determine whether the smart device is in a user operation state; and
the first message sending module 630 is configured to, when the determining module 620 determines that the smart device is not in the user operation state, identify a device which is in the user operation state, and send the message to the device which is in the user operation state.

In the above embodiment, when the smart device which receives the message is not in the user operation state, the device which is in the user operation state is identified, and the received message is sent to the smart device which is in the user operation state. Thereby, it can timely notify the user of receiving a new message, facilitate the user to timely check the new message, and can avoid missing an important message. This can bring convenience to the user and improve user experience.

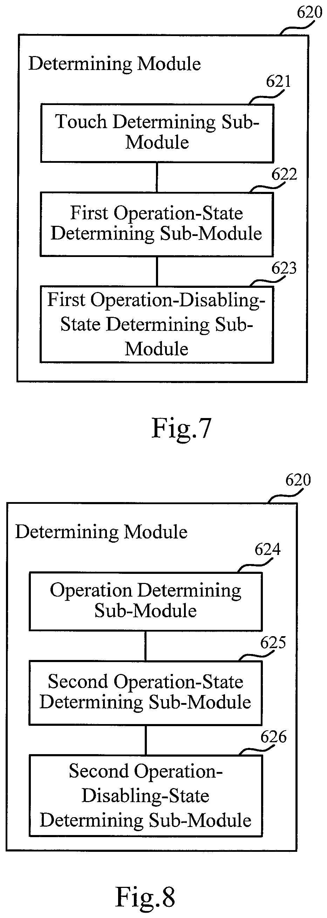

Fig. 7 is a block diagram of another device for sending a message according to an exemplary embodiment of the present disclosure. As shown in Fig. 7, based on the above embodiment as shown in Fig. 6, the determining module 620 can include: a touch determining sub-module 621, a first operation-state determining sub-module 622 and a first operation-disabling-state determining sub-module 623.

The touch determining sub-module 621 is configured to determine whether a touch operation occurs;
the first operation-state determining sub-module 622 is configured to, when the touch determining sub-module 621 detects a touch operation, determine that the smart device is in the user operation state; and
the first operation-disabling-state determining sub-module 623 is configured to, when the touch determining sub-module 621 detects no touch operation within a set time period, or when the touch determining sub-module 621 detects a locked screen, determine that the smart device is in a user operation disabling state.

In the above embodiment, the smart device which receives the message can determine whether the smart device itself is in a user operation state based on whether a touch operation is detected. The method is simple and easy for implementation, and has high determination accuracy.

Fig. 8 is a block diagram of another device for sending a message according to an exemplary embodiment of the present disclosure. As shown in Fig. 8, based on the above embodiment as shown in Fig. 6, the determining module 620 can include: an operation determining sub-module 624, a second operation-state determining sub-module 625 and a second operation-disabling-state determining sub-module 626.

The operation determining sub-module 624 is configured to determine whether a user switch-on operation is detected, or whether a user switch-off operation is detected;
the second operation-state determining sub-module 625 is configured to, when the operation determining sub-module 624 detects a switch-on operation, determine that the smart device is in the user operation state; and
the second operation-disabling-state determining sub-module 626 is configured to, when the operation determining sub-module 624 detects a switch-off operation, determine that the smart device is in a user operation disabling state.

In the above embodiment, the smart device which receives the message can determine whether the smart device itself is in a user operation state based on whether a switch-on operation or a switch-off operation is detected. The method, applicable to a wearable device, is simple and easy for implementation, and has high determination accuracy.

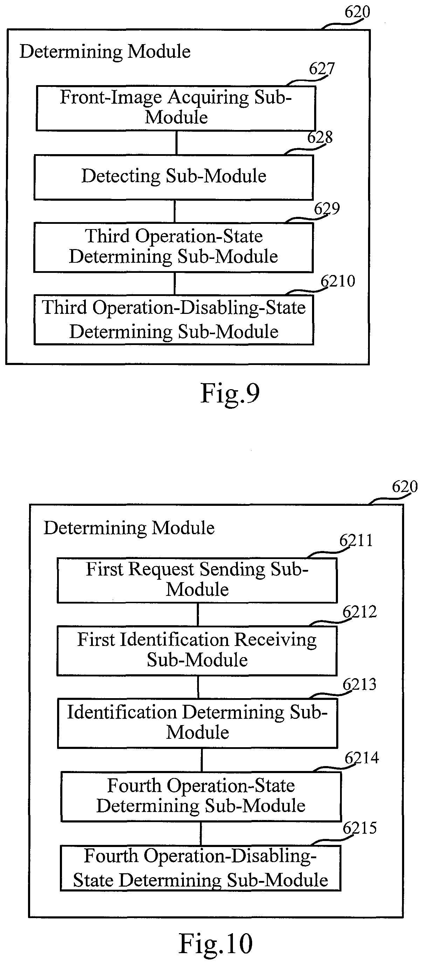

Fig. 9 is a block diagram of another device for sending a message according to an exemplary embodiment of the present disclosure. As shown in Fig. 9, based on the above embodiment as shown in Fig. 6, the determining module 620 can include: a front-image acquiring sub-module 627, a detecting sub-module 628, a third operation-state determining sub-module 629 and a third operation-disabling-state determining sub-module 6210.

Wherein, the front-image acquiring sub-module 627 is configured to acquire a front image through a front camera;
the detecting sub-module 628 is configured to determine whether a user face image is detected in the front image with a face recognition technique;
the third operation-state determining sub-module 629 is configured to, when the user face image is detected, determine that the smart device is in the user operation state; and
the third operation-disabling-state determining sub-module 6210 is configured to, when no user face image is detected, determine that the smart device is in a user operation disabling state.

In the above embodiment, the smart device which receives the message can determine whether the smart device itself is in a user operation state based on whether a user face image is detected. If a user face image is detected, it means that the user is close enough to the smart device. The method, applicable to a smart device with a camera, is simple and easy for implementation, and has high determination accuracy.

Fig. 10 is a block diagram of another device for sending a message according to an exemplary embodiment of the present disclosure. As shown in Fig. 10, based on the above embodiment as shown in Fig. 6, the determining module 620 can include: a first request sending sub-module 6211, a first identification receiving sub-module 6212, an identification determining sub-module 6213, a fourth operation-state determining sub-module 6214 and a fourth operation-disabling-state determining sub-module 6215.

The first request sending sub-module 6211 is configured to, when no current operation state can be acquired (failure to acquire a current operation state), send a request to a control device for acquiring a device which is in the user operation state, the control device being a device connected to smart devices for managing operation states of the smart devices;
the first identification receiving sub-module 6212 being configured to receive from the control device an identification of a device which is in the user operation state;
the identification determining sub-module 6213 being configured to determine whether the identification received by the first identification receiving sub-module 6212 corresponds to the identification of the smart device itself;
the fourth operation-state determining sub-module 6215 being configured to, when the identification determining sub-module 6213 determines that the received identification corresponds to the identification of the smart device itself, determine that the smart device is in the user operation state; and
the fourth operation-disabling-state determining sub-module 6215 being configured to, when the identification determining sub-module 6213 determines that the received identification does not correspond to the identification of the smart device itself, determine that the smart device is in a user operation disabling state.

In the above embodiment, the smart device which receives the message can determine whether the smart device itself is in a user operation state based on whether the identification of a device which is in a user operation state corresponds to the identification of the smart device itself. The method is simple and easy for implementation, and has high determination accuracy.

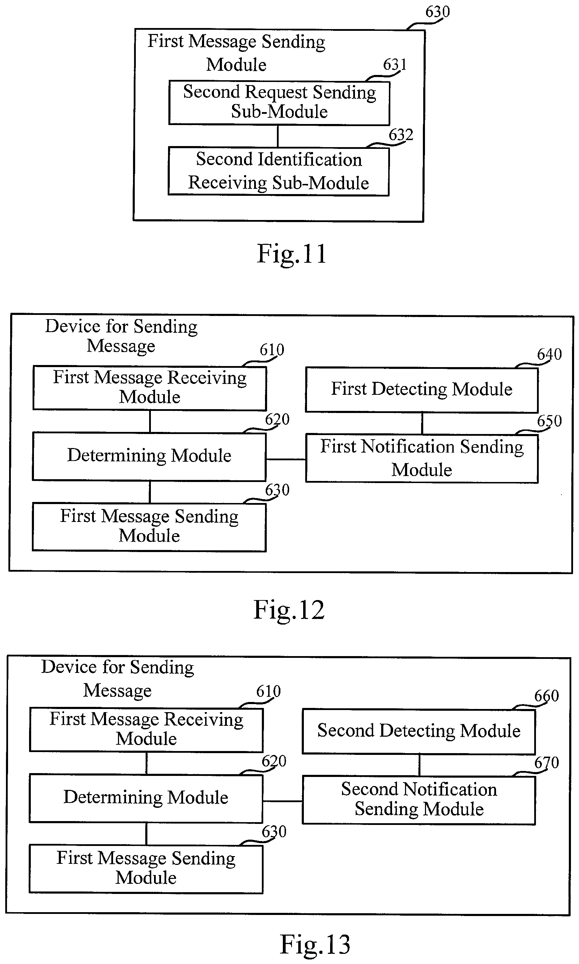

Fig. 11 is a block diagram of another device for sending a message according to an exemplary embodiment of the present disclosure. As shown in Fig. 11, based on the above embodiment as shown in Fig. 6, the first message sending module 630 can include: a second request sending sub-module 631 and a second identification receiving sub-module 632.

The second request sending sub-module 631 is configured to send a request to a control device for acquiring a device which is in the user operation state, the control device being a device connected to smart devices for managing operation states of the smart devices; and
the second identification receiving sub-module 632 is configured to receive from the control device an identification of a device which is in the user operation state.

Fig. 12 is a block diagram of another device for sending a message according to an exemplary embodiment of the present disclosure. As shown in Fig. 12, based on any of the above embodiments as shown in Figs. 6-11, the device also includes: a first detecting module 640 and a first notification sending module 650.

The first detecting module 640 is configured to detect whether the smart device itself is in the user operation state; and
the first notification sending module 650 is configured to, when the first detecting module 640 detects that the smart device is in the user operation state, send to a control device a notification of being in the user operation state.

In the above embodiment, the smart device can timely report to the control device when the smart device is in a user operation state, for the control device to timely update the stored state of the smart device.

The above first notification sending module 650 is configured to send to the control device the notification of being in the user operation state, the notification carrying its identification such that the control device store a state (or marks a stored state) corresponding to the identification as being in the user operation state.

The first notification sending module 650 is configured to perform any one of: detecting a user touch operation, detecting a user switch-on operation, or detecting a user face image in a front image captured by a front camera with a face recognition technique.

Fig. 13 is a block diagram of another device for sending a message according to an exemplary embodiment of the present disclosure. As shown in Fig. 13, based on any of the above embodiments as shown in Figs. 6-11, the device also includes: a second detecting module 660 and a second notification sending module 670.

The second detecting module 660 is configured to detect whether the smart device itself is in the user operation state; and
the second notification sending module 670 is configured to, when the second detecting module 660 detects that the smart device is in a user operation disabling state, send to a control device a notification of being in the user operation disabling state.

Wherein, the second notification sending module 670 is configured to perform any one of: detecting no user touch operation within a preset time period, detecting a locked screen, detecting a user switch-off operation, detecting no user face image in a front image captured by a front camera with a face recognition technique within a preset time period.

In the above embodiment, the smart device can timely report to the control device when the smart device is in a user operation disabling state, for the control device to timely update the stored state of the smart device.

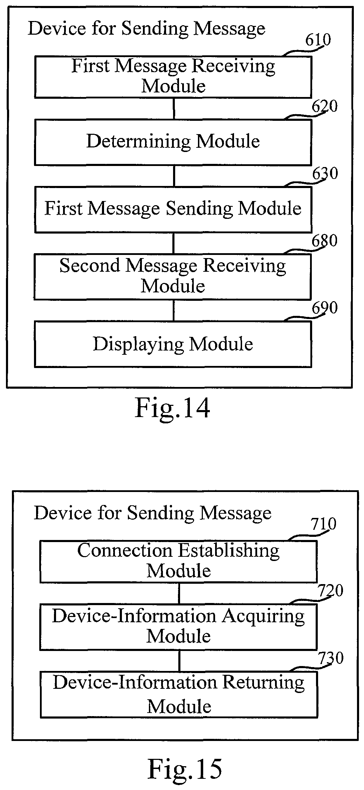

Fig. 14 is a block diagram of another device for sending a message according to an exemplary embodiment of the present disclosure. As shown in Fig. 14, based on any of the above embodiments as shown in Figs. 6-11, the device also includes: a second message receiving module 680 and a displaying module 690.

The second message receiving module 680 is configured to receive the message which is forwarded by the control device from other smart device receiving the message; and
the displaying module 690 is configured to display the message received by the second message receiving module 680, the message being received by the other smart device.

Wherein, the displaying module 690 is configured to display the message which is received by the other smart device on a screen or lenses.

In the above embodiment, the smart device which is in a user operation state can timely display a message upon receiving the message, to prompt the user to timely check the new message and not to miss an important message.

The above device for sending a message according to the embodiments as shown in Figs. 6-14 can be applied in a smart device.

Fig. 15 is a block diagram of another device for sending a message according to an exemplary embodiment of the present disclosure. As shown in Fig. 15, the device includes: a connection establishing module 710, a device-information acquiring module 720 and a device-information returning module 730.

The connection establishing module 710 is configured to establish connections with smart devices;
the device-information acquiring module 720 is configured to, when a device which is in the user operation state is identified, acquire information about the device which is in the user operation state; and
the device-information returning module 730 is configured to return the information about the device in the user operation state which is acquired by the device-information acquiring module 720.

In the above embodiment, when receiving a notification of a device being identified as in a user operation state, the control device can acquire information about the device which is in the user operation state and return the information about the device to the smart device. Thereby, the smart device which receives the message can timely forward the message to the smart device which is in the user operation state. It can timely notify the user of receiving a new message, facilitate the user to timely check the new message, and can avoid missing an important message. This can bring convenience to the user and improve user experience.

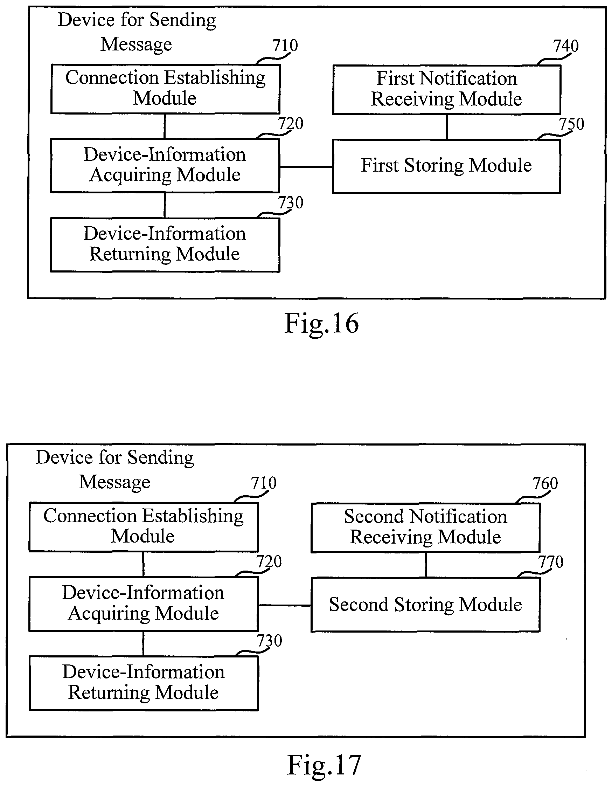

Fig. 16 is a block diagram of another device for sending a message according to an exemplary embodiment of the present disclosure. As shown in Fig. 16, based on the above embodiment as shown in Fig. 15, the device also includes: a first notification receiving module 740 and a first storing module 750.

The first notification receiving module 740 is configured to receive a notification of being in the user operation state sent by a smart device; and
the first storing module 750 is configured to store a most recent operation state of the smart device which is received by the first notification receiving module 740.

In the above embodiment, the control device can timely store and update a state of a smart device which is in a user operation state, based on a notification sent by the smart device.

Fig. 17 is a block diagram of another device for sending a message according to an exemplary embodiment of the present disclosure. As shown in Fig. 17, based on the above embodiment as shown in Fig. 15, the device also includes: a second notification receiving module 760 and a second storing module 770.

The second notification receiving module 760 is configured to receive a notification of being in a user operation disabling state sent by a smart device; and
the second storing module 770 is configured to store a most recent operation state of the smart device.

In the above embodiment, the control device can timely store and update a state of a smart device which is in a user operation disabling state, based on a notification sent by the smart device.

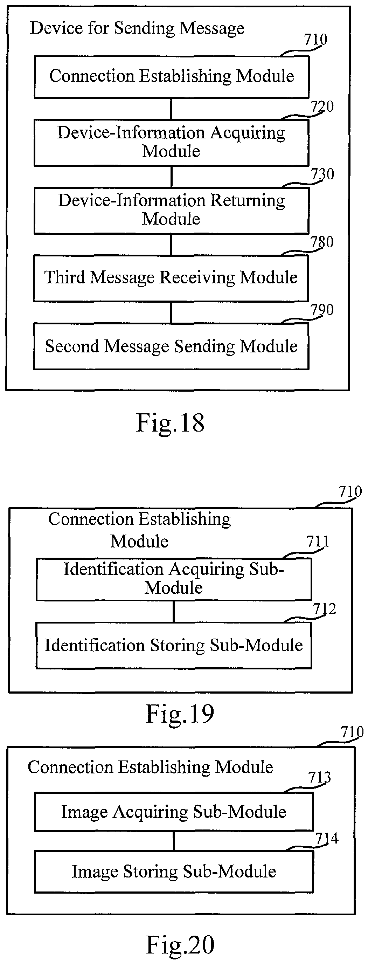

Fig. 18 is a block diagram of another device for sending a message according to an exemplary embodiment of the present disclosure. As shown in Fig. 18, based on the above embodiment as shown in Fig. 15, the device also includes: a third message receiving module 780 and a second message sending module 790.

The third message receiving module 780 is configured to receive from a smart device a message newly received by the smart device;
the second message sending module 790 is configured to send the message received by the third message receiving module 780 to a smart device which is in the user operation state.

Wherein the device-information acquiring module 720 is configured to retrieve the information about the device which is in the user operation state.

In the above embodiment, the control device can send the message newly received by the smart device to a smart device which is in a user operation state, to facilitate the user to timely check the message.

Fig. 19 is a block diagram of another device for sending a message according to an exemplary embodiment of the present disclosure. As shown in Fig. 19, based on any of the above embodiments as shown in Figs. 15-18, the connection establishing module 710 can include: an identification acquiring sub-module 711 and an identification storing sub-module 712.

The identification acquiring sub-module 711 is configured to acquire identifications of the smart devices; and
the identification storing sub-module 712 is configured to store the identifications of the smart devices which are received by the identification acquiring sub-module 711.

Fig. 20 is a block diagram of another device for sending a message according to an exemplary embodiment of the present disclosure. As shown in Fig. 19, based on any of the above embodiments as shown in Figs. 15-18, the connection establishing module 710 can include: an image acquiring sub-module 713 and an image storing sub-module 714.

The image acquiring sub-module 713 is configured to, when a connection is firstly established with a smart device, acquire an image of the smart device; and
the image storing sub-module 714 is configured to store the image of the smart device which is acquired by the image acquiring sub-module 713 as corresponding to an identification of the smart device.

Wherein, the image acquiring sub-module 713 is configured to capture the image of the smart device through a camera and store the image.

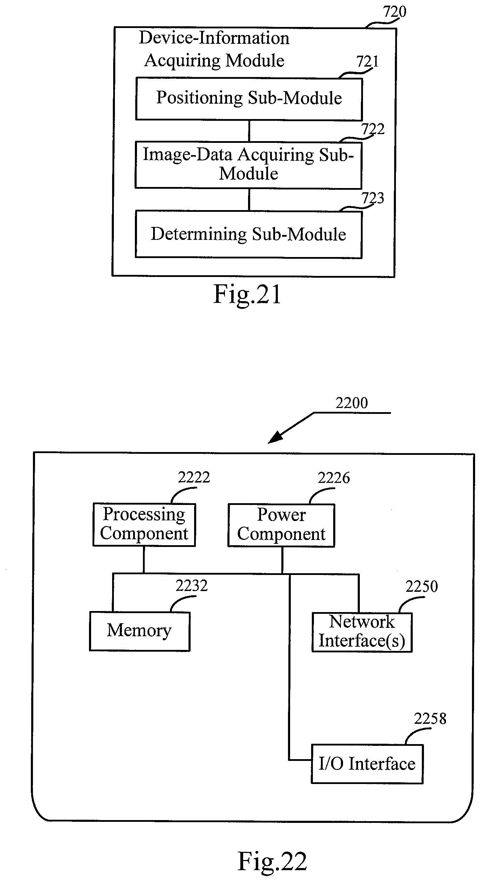

Fig. 21 is a block diagram of another device for sending a message according to an exemplary embodiment of the present disclosure. As shown in Fig. 21, based on the above embodiment as shown in Fig. 20, the device-information acquiring module 720 includes: a positioning sub-module 721, an image-data acquiring sub-module 722 and a determining sub-module 723.

The positioning sub-module 721 is configured to, when no information about the device which is in the user operation state is retrieved, position a current location of a user with an indoor positioning technique;
the image-data acquiring sub-module 722 is configured to acquire an image of a smart device which is in a set range about the user positioned by the positioning sub-module 721; and

the determining sub-module 723 is configured to match the image acquired by the image-data acquiring sub-module 722 with the stored image of the smart device to obtain a similarity, if the similarity is larger than a set threshold, determine the smart device corresponding to the image as the smart device which is in the user operation sate.

Wherein, the image-data acquiring sub-module 722 is configured to capture with a camera the image of the smart device which is in the set range about the user.

In the above embodiment, the control device can also store an identification and an image of a smart device when the control device firstly establishes a connection with the smart device. Then, when the control device cannot retrieve information about the device which is in the user operation state, the control device can position a current location of the user, acquire an image of a smart device which is in a set range about the user, and determine the smart device is the device which is in the user operation state if, based on the image, it is determined that smart device is a smart device already stored in the control device. Thereby, when the control device fails to timely update the state of the smart device which is in the user operation state, the control device can easily determine that the smart device is in the user operation state based on the image, so as to timely notify the user of receiving a new message.

The above device for sending a message according to the embodiments as shown in Figs. 15-21 can be applied in a router.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments The device embodiments described above are merely illustrative. The units described as separate may be or may not be physically separate, and the components illustrated as a units may be or may not be physical units, and may be at the same location, or may be distributed to multiple units over the network. A part of or the whole of the modules can be selected to achieve the objective of the present disclosure as desired. One skilled in the art can understand and practice the embodiments without paying any creative labor.

Correspondingly, the present disclosure also provides a terminal, wherein the terminal includes: a processor; and a memory for storing instructions executable by the processor; wherein the processor is configured to perform:
receiving a message;
determining whether the terminal is in a user operation state; and
when the terminal is not in the user operation state, identifying a device which is in the user operation state, and sending the message to the device which is in the user operation state.

Correspondingly, the present disclosure also provides a router, wherein the router includes: a processor; and a memory for storing instructions executable by the processor; wherein the processor is configured to perform:
establishing connections with smart devices;
when identifying a device which is in the user operation state, acquiring information about the device which is in the user operation state; and
returning the information about the device in the user operation state.

Fig. 22 is a block diagram of a device 2200 for sending a message according to an exemplary embodiment. For example, the device 2200 can be provided as a router. Referring to Fig. 22, the device 2200 includes a processing component 2222 that further includes one or more processors, and memory resources represented by a memory 2232 for storing instructions executable by the processing component 2222, such as application programs. The application programs stored in the memory 2232 may include one or more modules each corresponding to a set of instructions. Further, the processing component 2222 is configured to execute the instructions to perform the above described method for sending a message.

The device 2200 can also include a power component 2226 configured to perform power management of the device 2200, wired or wireless network interface(s) 2250 configured to connect the device 2200 to a network, and an input/output (I/O) interface 2258. The device 2200 may operate based on an operating system stored in the memory 2232, such as Windows Server™, Mac OS X™, Unix™, Linux™, FreeBSD™, or the like.

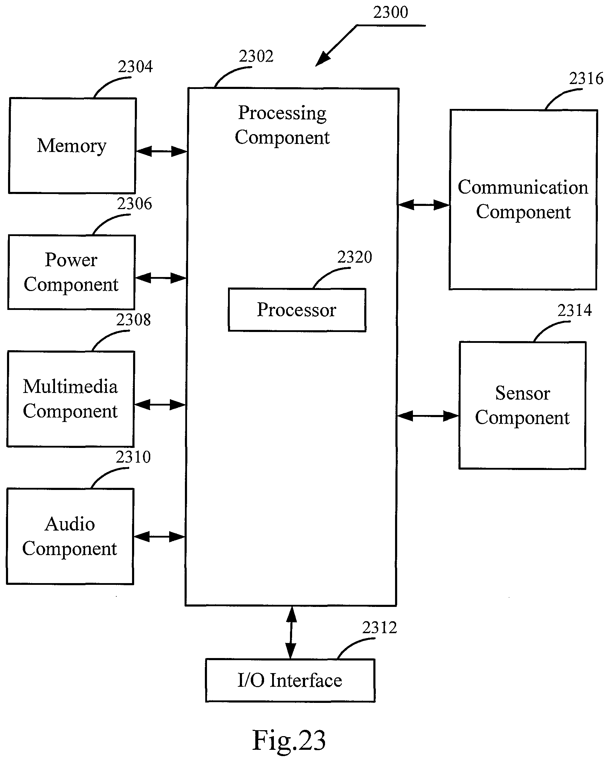

Fig. 23 is a block diagram of a device 2300 for sending a message according to an exemplary embodiment. For example, the device 2300 can be a device which can operating as a router, such as a mobile phone, a computer, a digital broadcast terminal, a messaging device, a gaming console, a tablet, a medical device, exercise equipment, a personal digital assistant, and the like.

Referring to Fig. 23, the device 2300 can include one or more of the following components: a processing component 2302, a memory 2304, a power component 2306, a multimedia component 2308, an audio component 2310, an input/output (I/O) interface 2312, a sensor component 2314, and a communication component 2316.

The processing component 2302 typically controls overall operations of the device 2300, such as the operations associated with display, telephone calls, data communications, camera operations, and recording operations. The processing component 2302 can include one or more processors 2320 to execute instructions to perform all or part of the steps in the above described methods. Moreover, the processing component 2302 can include one or more modules which facilitate the interaction between the processing component 2302 and other components. For instance, the processing component 2302 can include a multimedia module to facilitate the interaction between the multimedia component 2308 and the processing component 2302.

The memory 2304 is configured to store various types of data to support the operation of the device 2300. Examples of such data include instructions for any applications or methods operated on the device 2300, contact data, phonebook data, messages, pictures, video, etc. The memory 2304 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2306 provides power to various components of the device 2300. The power component 2306 can include a power management system, one or more power sources, and any other components associated with the generation, management, and distribution of power in the device 2300.

The multimedia component 2308 includes a screen providing an output interface between the device 2300 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 2308 includes a front camera and/or a rear camera. The front camera and the rear camera can receive an external multimedia datum while the device 2300 is in an operation mode, such as a photographing mode or a video mode. Each of the front camera and the rear camera can be a fixed optical lens system or have focus and optical zoom capability.

The audio component 2310 is configured to output and/or input audio signals. For example, the audio component 2310 includes a microphone ("MIC") configured to receive an external audio signal when the device 2300 is in an operation mode, such as a call mode, a recording mode, and a voice recognition mode. The received audio signal can be further stored in the memory 2304 or transmitted via the communication component 2316. In some embodiments, the audio component 2310 further includes a speaker to output audio signals.

The I/O interface 2312 provides an interface between the processing component 2302 and peripheral interface modules, such as a keyboard, a click wheel, buttons, and the like. The buttons can include, but are not limited to, a home button, a volume button, a starting button, and a locking button.

The sensor component 2314 includes one or more sensors to provide status assessments of various aspects of the device 2300. For instance, the sensor component 2314 can detect an open/closed status of the device 2300, relative positioning of components, e.g., the display and the keypad, of the device 2300, a change in position of the device 2300 or a component of the device 2300, a presence or absence of user contact with the device 2300, an orientation or an acceleration/deceleration of the device 2300, and a change in temperature of the device 2300. The sensor component 2314 can include a proximity sensor configured to detect the presence of nearby objects without any physical contact. The sensor component 2314 can also include a light sensor, such as a CMOS or CCD image sensor, for use in imaging applications. In some embodiments, the sensor component 2314 can also include an accelerometer sensor, a gyroscope sensor, a magnetic sensor, a pressure sensor, a microwave sensor or a temperature sensor.

The communication component 2316 is configured to facilitate communication, wired or wirelessly, between the device 2300 and other devices. The device 2300 can access a wireless network based on a communication standard, such as WiFi, 2G, or 3G, or a combination thereof. In one exemplary embodiment, the communication component 2316 receives a broadcast signal or broadcast associated information from an external broadcast management system via a broadcast channel. In one exemplary embodiment, the communication component 2316 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 2300 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 2304, executable by the processor 2320 in the device 2300, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of a mobile terminal, the mobile terminal is caused to perform a method for sending a message. The method includes:
receiving a message;
determining whether the mobile terminal is in a user operation state; and
when the mobile terminal is not in the user operation state, identifying a device which is in the user operation state, and sending the message to the device which is in the user operation state.

The present disclosure also provides a non-transitory computer readable storage medium, when instructions in the storage medium are executed by the processor of a router, the router is caused to perform a method for sending a message. The method includes:
establishing connections with smart devices;
when identifying a device which is in the user operation state, acquiring information about the device which is in the user operation state; and
returning the information about the device in the user operation state.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for sending information, which is applied in a control device, said method comprising the steps of:
establishing (301) connections with smart devices through a wireless network, wherein said step of establishing (301) comprises the step of storing identifications of the smart devices and the corresponding states of said smart devices as being in a user operation state or in a user disabling state; and
when identifying a device which is in the user operation state, acquiring (302) information about the device which is in the user operation state; and
returning (303), the information about the device in the user operation state to a smart device, from which a request for acquiring a device which is in the user operation state was previously received,
said method being **characterized in that**:
said step of establishing connections (301) with smart devices further comprises the steps of:
when firstly establishing a connection with a smart device, acquiring an image of the smart device; and
storing the image of the smart device as corresponding to an identification of the smart device; and **in that** said step of acquiring information (302) about the device which is in the user operation state comprises the steps of :
when no information about the device which is in the user operation state is retrieved, determining (405) a current location of a user with an indoor positioning technique;
acquiring (406) an image of a smart device which is in a set range about the user; and
matching (407) the acquired image with the stored image of the smart device to obtain a similarity, if the similarity is larger than a set threshold, determining the smart device corresponding to the image as the smart device which is in the user operation sate.

2. The method of claim 1, **characterized in that** the method further comprises the steps of:
receiving a notification of being in the user operation state sent by a smart device; and
storing a most recent operation state of the smart device.

3. The method of claim 1 or 2, **characterized in that** the method further comprises the steps of :
receiving a notification of being in a user operation disabling state sent by a smart device; and
storing a most recent operation state of the smart device.

4. The method of claim any one of claims 1 to 4, **characterized in that** the method further comprises the steps of :
receiving from a smart device a message newly received by the smart device;
sending the message to a smart device which is in the user operation state.

5. A control device comprising :
a connection establishing module (710) configured to establish (301) connections with smart devices through a wireless network, wherein said step of establishing (301) comprises the step of storing identifications of the smart devices and the corresponding states of said smart devices as being in a user operation state or in a user disabling state;
a device-information acquiring module (720) configured to, when a device which is in the user operation state is identified, acquire (302) information about the device which is in the user operation state; and
a device-information returning module (730) configured to return (303) the information about the device in the user operation state to a smart device from which a request for acquiring a device which is in the user operation state was previously received;
said control device being **characterized in that**:
the connection establishing module (710) is configured, when firstly establishing a connection with a smart device, to acquire an image of the smart device and to store the image of the smart device as corresponding to an identification of the smart device;
and **in that**:
the device-information acquiring module (720) is configured, when no information about the device which is in the user operation state is retrieved, to:
determine (405) a current location of a user with an indoor positioning technique;
acquire (406) an image of a smart device which is in a set range about the user;
match (407) the acquired image with the stored image of the smart device to obtain a similarity; and
if the similarity is larger than a set threshold, determine the smart device corresponding to the image as the smart device which is in the user operation sate.

## Patentansprüche

1. Verfahren zum Senden von Informationen, das in einer Steuervorrichtung angewandt wird, wobei das Verfahren die Schritte umfasst des:
Herstellens (301) von Verbindungen mit intelligenten Vorrichtungen durch ein drahtloses Netzwerk, wobei der Schritt des Herstellens (301) den Schritt des Speicherns von Identifizierungen der intelligenten Vorrichtungen und der entsprechenden Zustände der intelligenten Vorrichtungen als in einem Benutzerbetriebszustand oder in einem Benutzerdeaktivierungszustand befindlich umfasst, und
beim Identifizieren einer Vorrichtung, die sich in dem Benutzerbetriebszustand befindet, Erlangens (302) von Informationen über die Vorrichtung, die sich in dem Benutzerbetriebszustand befindet, und
Zurücksendens (303) der Informationen über die Vorrichtung in dem Benutzerbetriebszustand an eine intelligente Vorrichtung, von welcher zuvor eine Anforderung zum Erlangen einer Vorrichtung, die sich in dem Benutzerbetriebszustand befindet, empfangen wurde,
wobei das Verfahren **dadurch gekennzeichnet ist, dass**:
der Schritt des Herstellens von Verbindungen (301) mit intelligenten Vorrichtungen ferner die Schritte umfasst des:
wenn eine Verbindung mit einer intelligenten Vorrichtung erstmals hergestellt wird, Erlangens eines Abbilds der intelligenten Vorrichtung, und
Speicherns des Abbilds der intelligenten Vorrichtung als einer Identifizierung der intelligenten Vorrichtung entsprechend, und dadurch, dass
der Schritt des Erlangens von Informationen (302) über die Vorrichtung, die sich in dem Benutzerbetriebszustand befindet, die Schritte umfasst des:
wenn keine Informationen über die Vorrichtung, die sich in dem Benutzerbetriebszustand befindet, abgerufen werden, Bestimmens (405) eines aktuellen Standorts eines Benutzers mit einer Positionsbestimmungstechnik für Innenräume,
Erlangens (406) eines Abbilds einer intelligenten Vorrichtung, die sich in einem festgelegten Bereich um den Benutzer befindet, und
Abgleichens (407) des erlangten Abbilds mit dem gespeicherten Abbild der intelligenten Vorrichtung, um eine Ähnlichkeit zu erhalten, wenn die Ähnlichkeit größer als ein festgelegter Schwellenwert ist, Bestimmens der intelligenten Vorrichtung entsprechend dem Abbild als die intelligente Vorrichtung, die sich in dem Benutzerbetriebszustand befindet.

2. Verfahren nach Anspruch 1, **dadurch gekennzeichnet, dass** das Verfahren ferner die Schritte umfasst des:
Empfangens einer Benachrichtigung, die durch die intelligente Vorrichtung gesendet wurde, darüber, in dem Benutzerbetriebszustand zu sein, und
Speicherns eines aktuellsten Betriebszustands der intelligenten Vorrichtung.

3. Verfahren nach Anspruch 1 oder 2, **dadurch gekennzeichnet, dass** das Verfahren ferner die Schritte umfasst des:
Empfangens einer Benachrichtigung, die durch eine intelligente Vorrichtung gesendet wurde, darüber, in einem Benutzerbetriebsdeaktivierungszustand zu sein, und
Speicherns eines aktuellsten Betriebszustands der intelligenten Vorrichtung.

4. Verfahren nach einem der Ansprüche 1 bis 3, **dadurch gekennzeichnet, dass** das Verfahren ferner die folgenden Schritte umfasst des:
Empfangens, von einer intelligenten Vorrichtung, einer vor kurzem durch die intelligente Vorrichtung empfangenen Nachricht,
Sendens der Nachricht an eine intelligente Vorrichtung, die sich in dem Benutzerbetriebszustand befindet.

5. Steuervorrichtung, umfassend:
ein Verbindungsherstellungsmodul (710), das dazu ausgestaltet ist, Verbindungen mit intelligenten Vorrichtungen durch ein drahtloses Netzwerk herzustellen (301), wobei der Schritt des Herstellens (301) den Schritt des Speicherns von Identifizierungen der intelligenten Vorrichtungen und der entsprechenden Zustände der intelligenten Vorrichtungen als in einem Benutzerbetriebszustand oder in einem Benutzerdeaktivierungszustand befindlich umfasst,
ein Vorrichtungsinformations-Erlangungsmodul (720), das dazu ausgestaltet ist, Informationen über die Vorrichtung, die sich in dem Benutzerbetriebszustand befindet, zu erlangen (302), wenn eine Vorrichtung, die sich in dem Benutzerbetriebszustand befindet, identifiziert wird, und
ein Vorrichtungsinformations-Rücksendemodul (730), das dazu ausgestaltet ist, die Informationen über die Vorrichtung in dem Benutzerbetriebszustand an eine intelligente Vorrichtung zurückzusenden (303), von welcher zuvor eine Anforderung zum Erlangen einer Vorrichtung, die sich in dem Benutzerbetriebszustand befindet, empfangen wurde,
wobei die Steuervorrichtung **dadurch gekennzeichnet ist, dass**:
das Verbindungsherstellungsmodul (710) dazu ausgestaltet ist, wenn eine Verbindung mit einer intelligenten Vorrichtung erstmals hergestellt wird, ein Abbild der intelligenten Vorrichtung zu erlangen und das Abbild der intelligenten Vorrichtung als einer Identifizierung der intelligenten Vorrichtung entsprechend zu speichern,
und dadurch, dass:
das Vorrichtungsinformations-Erlangungsmodul (720), wenn keine Informationen über die Vorrichtung, die sich in dem Benutzerbetriebszustand befindet, abgerufen werden, dazu ausgestaltet ist:
einen aktuellen Standort eines Benutzers mit einer Positionsbestimmungstechnik für Innenräume zu bestimmen (405),
ein Abbild einer intelligenten Vorrichtung zu erlangen (406), die sich in einem festgelegten Bereich um den Benutzer befindet,
das erlangte Abbild mit dem gespeicherten Abbild der intelligenten Vorrichtung abzugleichen (407), um eine Ähnlichkeit zu erhalten, und
wenn die Ähnlichkeit über einem festgelegten Schwellenwert liegt, die intelligente Vorrichtung entsprechend dem Abbild als die intelligente Vorrichtung zu bestimmen, die sich in dem Benutzerbetriebszustand befindet.

## Revendications

1. Procédé d'envoi d'informations, lequel procédé est mis en oeuvre dans un dispositif de commande, ledit procédé comprenant les étapes ci-dessous consistant à
établir (301) des connexions avec des dispositifs intelligents par l'intermédiaire d'un réseau sans fil, dans lequel ladite étape d'établissement (301) de connexions comprend l'étape consistant à stocker des identifications des dispositifs intelligents et les états correspondants desdits dispositifs intelligents comme étant dans un état de fonctionnement utilisateur ou dans un état de désactivation de fonctionnement utilisateur ; et
lors de l'identification d'un dispositif qui se trouve dans l'état de fonctionnement utilisateur, acquérir (302) des informations concernant le dispositif qui se trouve dans l'état de fonctionnement utilisateur ; et
renvoyer (303) les informations concernant le dispositif dans l'état de fonctionnement utilisateur, à un dispositif intelligent, en provenance duquel une demande d'acquisition d'un dispositif qui se trouve dans l'état de fonctionnement utilisateur a été précédemment reçue ;
ledit procédé étant **caractérisé en ce que** :
ladite étape d'établissement (301) de connexions avec des dispositifs intelligents comprend en outre les étapes ci-dessous consistant à :
lors du tout premier établissement d'une connexion avec un dispositif intelligent, acquérir une image du dispositif intelligent ; et
stocker l'image du dispositif intelligent comme correspondant à une identification du dispositif intelligent ; et **en ce que**
ladite étape d'acquisition d'informations (302) concernant le dispositif qui se trouve dans l'état de fonctionnement utilisateur comprend les étapes ci-dessous consistant à :
lorsqu'aucune information sur le dispositif qui se trouve dans l'état de fonctionnement utilisateur n'est récupérée, déterminer (405) un emplacement en cours d'un utilisateur au moyen d'une technique de positionnement en intérieur ;
acquérir (406) une image d'un dispositif intelligent qui se situe dans une plage définie relativement à l'utilisateur ; et
mettre en correspondance (407) l'image acquise avec l'image stockée du dispositif intelligent, en vue d'obtenir une similitude, et si la similitude est supérieure à un seuil défini, déterminer que le dispositif intelligent correspondant à l'image correspond au dispositif intelligent qui se trouve dans l'état de fonctionnement utilisateur.

2. Procédé selon la revendication 1, **caractérisé en ce que** le procédé comprend en outre les étapes ci-dessous consistant à :
recevoir une notification indiquant un état de fonctionnement utilisateur, envoyée par un dispositif intelligent ; et
stocker un état de fonctionnement le plus récent du dispositif intelligent.

3. Procédé selon la revendication 1 ou 2, **caractérisé en ce que** le procédé comprend en outre les étapes ci-dessous consistant à :
recevoir une notification indiquant un état de désactivation de fonctionnement utilisateur, envoyée par un dispositif intelligent ; et
stocker un état de fonctionnement le plus récent du dispositif intelligent.

4. Procédé selon l'une quelconque des revendications 1 à 3, **caractérisé en ce que** le procédé comprend en outre les étapes ci-dessous consistant à :
recevoir, en provenance d'un dispositif intelligent, un message nouvellement reçu par le dispositif intelligent ; et
envoyer le message à un dispositif intelligent qui est dans l'état de fonctionnement utilisateur.

5. Dispositif de commande comprenant :
un module d'établissement de connexions (710) configuré de manière à établir (301) des connexions avec des dispositifs intelligents par l'intermédiaire d'un réseau sans fil, dans lequel ladite étape d'établissement (301) de connexions comprend l'étape consistant à stocker des identifications des dispositifs intelligents et les états correspondants desdits dispositifs intelligents comme étant dans un état de fonctionnement utilisateur ou dans un état de désactivation de fonctionnement utilisateur ; et
un module d'acquisition d'informations de dispositif (720) configuré de manière à, lorsqu'un dispositif, qui est dans l'état de fonctionnement utilisateur, est identifié, acquérir (302) des informations concernant le dispositif qui se trouve dans l'état de fonctionnement utilisateur ; et
un module de renvoi d'informations de dispositif (730) configuré de manière à renvoyer (303) les informations concernant le dispositif dans l'état de fonctionnement utilisateur à un dispositif intelligent, en provenance duquel une demande d'acquisition d'un dispositif qui se trouve dans l'état de fonctionnement utilisateur a été précédemment reçue ;
ledit dispositif de commande étant **caractérisé en ce que** :
ledit module d'établissement de connexions (710) est configuré de manière à, lors du tout premier établissement d'une connexion avec un dispositif intelligent, acquérir une image du dispositif intelligent, et stocker l'image du dispositif intelligent comme correspondant à une identification du dispositif intelligent ; et **en ce que** :
le module d'acquisition d'informations de dispositif (720) est configuré de manière à, lorsqu'aucune information sur le dispositif qui se trouve dans l'état de fonctionnement utilisateur n'est récupérée :
déterminer (405) un emplacement en cours d'un utilisateur au moyen d'une technique de positionnement en intérieur ;
acquérir (406) une image d'un dispositif intelligent qui se situe dans une plage définie relativement à l'utilisateur ; et
mettre en correspondance (407) l'image acquise avec l'image stockée du dispositif intelligent, en vue d'obtenir une similitude ; et
si la similitude est supérieure à un seuil défini, déterminer que le dispositif intelligent correspondant à l'image correspond au dispositif intelligent qui se trouve dans l'état de fonctionnement utilisateur.
